Europäisches Patentamt

European Patent Office

Office européen des brevets

(11) Veröffentlichungsnummer: **0 364 706**
**A2**

## EUROPÄISCHE PATENTANMELDUNG

(21) Anmeldenummer: **89116094.7**

(22) Anmeldetag: **31.08.89**

(51) Int. Cl.5: **A47L 15/42 , H02K 9/06 , F04D 13/06 , F04D 29/58**

(30) Priorität: **15.10.88 DE 8813030 U**

(43) Veröffentlichungstag der Anmeldung:
**25.04.90 Patentblatt 90/17**

(84) Benannte Vertragsstaaten:
**DE FR IT**

(71) Anmelder: **Halm, Richard**
**Silcherstrasse 54 Postfach 69**
**D-7066 Baltmannsweiler(DE)**

(72) Erfinder: **Halm, Richard**
**Silcherstrasse 54 Postfach 69**
**D-7066 Baltmannsweiler(DE)**

(74) Vertreter: **Patentanwälte Phys. Bartels**
**Dipl.-Ing. Fink Dr.-Ing. Held**
**Lange Strasse 51**
**D-7000 Stuttgart 1(DE)**

(54) **Pumpenaggregat, insbesondere für Geschirrspüler.**

(57) Bei einem Pumpenaggregat, insbesondere für Geschirrspüler, bestehend aus einer Pumpe (1) und einem gleichachsig an diese angebauten Asynchronmotor (2), der wenigstens an der einen Stirnseite seines Rotors (23) ein Radiallüfterrad bildende Lüfterflügel (22) aufweist, ist jedem vorhandenen Radiallüfterrad eine relativ zum Stator (7) und der Statorwicklung feststehende Luftleitvorrichtung (18) zugeordnet, die zusammen mit dem das Lüfterrad in radialem Abstand umgebenden Wickelkopf (12) der Statorwicklung zumindest im Übergangsbereich der Wickelkopfoberfläche von der Innenmantelfläche (13) zur Außenmantelfläche (14) einen Luftleitkanal (19) bildet. Dieser Luftleitkanal (19) lenkt die nach dem Austritt aus dem Lüfterrad gegen die Innenmantelfläche (13) des Wickelkopfes (12) gerichtete Kühlluft um das freiliegende Wickelkopfende herum.

Fig.1

EP 0 364 706 A2

Xerox Copy Centre

## Pumpenaggregat, insbesondere für Geschirrspüler

Die Erfindung betrifft ein Pumpenaggregat, insbesondere für Geschirrspüler, bestehend aus einer Pumpe und einem gleichachsig an diese angebauten Asynchronmotor, der wenigstens an der einen Stirnseite seines Rotors ein Radiallüfterrad bildende Lüfterflügel aufweist.

Bei einem bekannten Pumpenaggregat dieser Art (G 88 05 378.4) lassen sich bereits die an solche Aggregate gestellten technischen Anforderungen kostengünstig erfüllen. Lediglich hinsichtlich der Kühlung der Statorwicklung sowie der Verbindung des Motors mit der Pumpe und mit einem gegebenenfalls erforderlichen Fuß ist diese bekannte Lösung nicht optimal.

Der Erfindung liegt deshalb die Aufgabe zugrunde, ein Pumpenaggragat der eingangs genannten Art noch weiter zu verbessern. Hinsichtlich der Kühlung der Statorwicklung wird diese Aufgabe durch die Merkmale des Anspruches 1 gelöst.

Da die erfindungsgemäße Luftleitvorrichtung die vom Lüfterrad geförderte Kühlluft um das Wickelkopfende herum nach außen ableitet, wird zum einen die von der Kühlluft überstrichene Oberfläche des Wickelkopfes vergrößert, was die Kühlwirkung erhöht. Zum anderen wird in einfacher leise verhindert, daß die aus dem Motor austretende Kühlluft sofort wieder durch die Luftansaugkanäle hindurch vom Lüfterrad angesaugt wird, was ebenfalls zu einer erheblichen Verbesserung der Kühlung der Statorwicklung führt. Da dank der Luftleitvorrichtung der Querschnitt des Luftleitkanales festlegbar ist, ermöglicht die erfindungsgemäße Luftleitvorrichtung außerdem eine Optimierung des Kanalquerschnittes dahingehend, daß die Luftmenge und die Strömungsgeschwindigkeit ein Optimum der Kühlung ergeben. Selbstverständlich ist es zweckmäßig, beiden Wickelköpfen eine erfindungsgemäße Luftleitvorrichtung zuzuordnen.

Die Luftleitvorrichtung kann sich soweit über das freie Ende des Wickelkopfes hinweg erstrecken, daß die aus dem Luftleitkanal austretende Luft gegen den Stator hin gerichtet ist und dadurch auch die Außenmantelfläche des Wickelkopfes überstreicht. Um diese Luftleitwirkung zu unterstützen, kann die Luftleitvorrichtung sich radial außerhalb des Wickelkopfes gegen den Stator hin erstrecken. Sie bildet dann für den Wickelkopf gleichzeitig ein Schutzgehäuse. Man kann sogar dieses Schutzgehäuse so gestalten, daß zwischen ihm und dem Stator ein ringförmiger Schlitz vorhanden ist, aus dem die Kühlluft austritt und durch den hindurch eine Person den Wickelkopf nicht mehr er reichen kann, so daß die Luftleitvorrichtung in diesem Falle auch einen vollständigen Berührungsschutz bildet.

Der Aufwand für die Luftleitvorrichtung ist gering, da sie durch eine Ringscheibe aus Metall oder Kunststoff gebildet sein kann. Diese Ringscheibe ist vorzugsweise einstückig ausgebildet und weist in dem die Leitfläche für die Luft bildenden Bereich die Querschnittsform einer den Wickelkopf im Abstand übergreifenden Rinne auf.

Um eine derartige Ringscheibe in einfacher Weise festlegen zu können, ist bei einer bevorzugten Ausführungsform die innere Randzone auf einem am Lagerschild vorgesehenen Sitz aufsteckbar.

Um die Kühlwirkung zu verbessern, ist es ferner vorteilhaft, die in axialer Richtung gemessene Länge der Wickelköpfe dadurch zu vergrößern, daß man die Innenmantelfläche der Wickelköpfe gemäß Anspruch 5 ausbildet, wobei es für die Umlenkung der in radialer Richtung aus dem Lüfterrad austretenden Luft von Vorteil ist, eine als Umlenkfläche dienende Hohlkehle gemäß Anspruch 6 vorzusehen. Eine derartige Verlängerung der Wickelköpfe ermöglicht auch, die axiale Länge der Lüfterflügel zu vergrößern, wodurch das Lüfterrad eine größere Luftmenge fördern kann, was wiederum die Kühlwirkung erhöht. Schließlich ist es zur Verbesserung der Kühlwirkung vorteilhaft, die Wickelköpfe, vorzugsweise die gesamte Statorwicklung, in Gießharz einzubetten.

Eine wesentliche Verbesserung der Verbindung zwischen dem Motor und dem Pumpengehäuse läßt sich gegenüber der vorbekannten Lösung durch Distanzbuchsen zwischen dem Stator und dem Pumpengehäuse erreichen, welche von den den Stator mit dem Pumpengehäuse verbindenden Schrauben durchdrungen sind. Trotz eines relativ großen Abstandes zwischen dem Stator und dem Pumpengehäuse ermöglichen diese Distanzbuchsen eine relativ geringe axiale Länge der Vorsprünge des Pumpengehäuses, in welche die Verbindungsschrauben eingreifen.

Bei einer bevorzugten Ausführungsform dienen die Distanzbuchsen außerdem als Träger für Durchführungstüllen aus Gummi, die ihrerseits in Ausnehmungen eines Tragteiles eingesetzt sind. Man erhält auf diese Weise eine äußerst kostengünstige, leicht zu montierende und zuverlässige elastische Verbindung zwischen dem Aggregat und dem Tragteil, bei dem es sich beispielsweise um einen Fuß handelt.

Im folgenden ist die Erfindung anhand eines in der Zeichnung dargestellten Ausführungsbeispiels im einzelnen erläutert. Es zeigen

Fig. 1 eine teilweise in Längsrichtung geschnitten dargestellte Seitenansicht des Ausführungsbeispiels,

Fig. 2 eine Draufsicht auf die der Pumpe abgekehrte Stirnseite des Motors,

Fig. 3 eine Draufsicht auf die Luftleitvorrichtung,

Fig. 4 eine Seitenansicht der Luftleitvorrichtung,

Fig. 5 einen Schnitt nach der Linie V-V der Fig. 3.

Ein Pumpenaggragat für einen Geschirrspüler besteht aus einer als Ganzes mit 1 bezeichneten Pumpe und einem mit dieser baulich vereinigten Asynchronmotor 2. Im Inneren des aus Kunststoff bestehenden, zweiteiligen Gehäuses 3 der Pumpe 1 ist ein nicht dargestelltes, in bekannter Weise ausgebildetes Pumpenrad angeordnet, das auf der Welle 4 des Asynchronmotors 2 festgelegt ist.

An die dem Asynchronmotor 2 zugekehrte Seite des Gehäuses 3 sind stabförmige Vorsprünge 5 angeformt, die eine verhältnismäßig geringe axiale Länge haben und in die je eine Verbindungsschraube 6 eingreift. Diese Verbindungsschrauben 6 durchdringen das Statorblechpaket 7 des Asynchronmotors 2 und tragen je eine Distanzbuchse 8, deren eines Ende am Statorblechpaket 7 und deren anderes Ende an der Stirnfläche des Vorsprunges 5 anliegt. Trotz der geringen axialen Länge der Vorsprünge 5 befindet sich deshalb das Statorblechpaket 7 in dem gewünschten und erforderlichen Abstand vom Gehäuse 3.

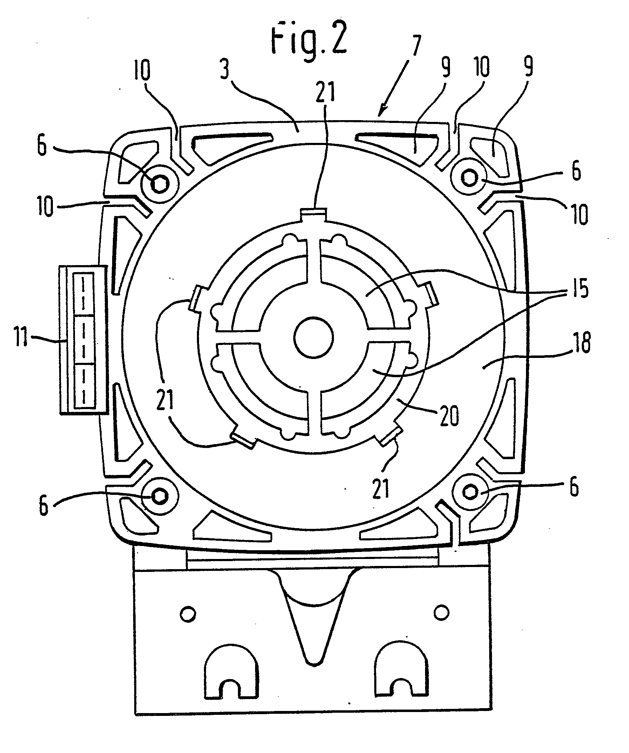

Wie Fig. 2 zeigt, hat das Statorblechpaket 7 im wesentlichen quadratische Stirnflächen, wobei die vier Eckzonen mit durchgehenden Kanälen 9 und Schlitzen 10 versehen ist. Einer dieser Kanäle 9 ist als Bohrung zur Aufnahme je einer der Verbindungsschrauben 6 ausgebildet. In die Schlitze 10 können Verbindungslaschen oder dgl. eingeführt werden, um beispielsweise einen Fuß, im Ausführungsbeispiel einen Klemmkasten 11, mit dem Statorblechpaket 7 in einfacher Weise verbinden zu können.

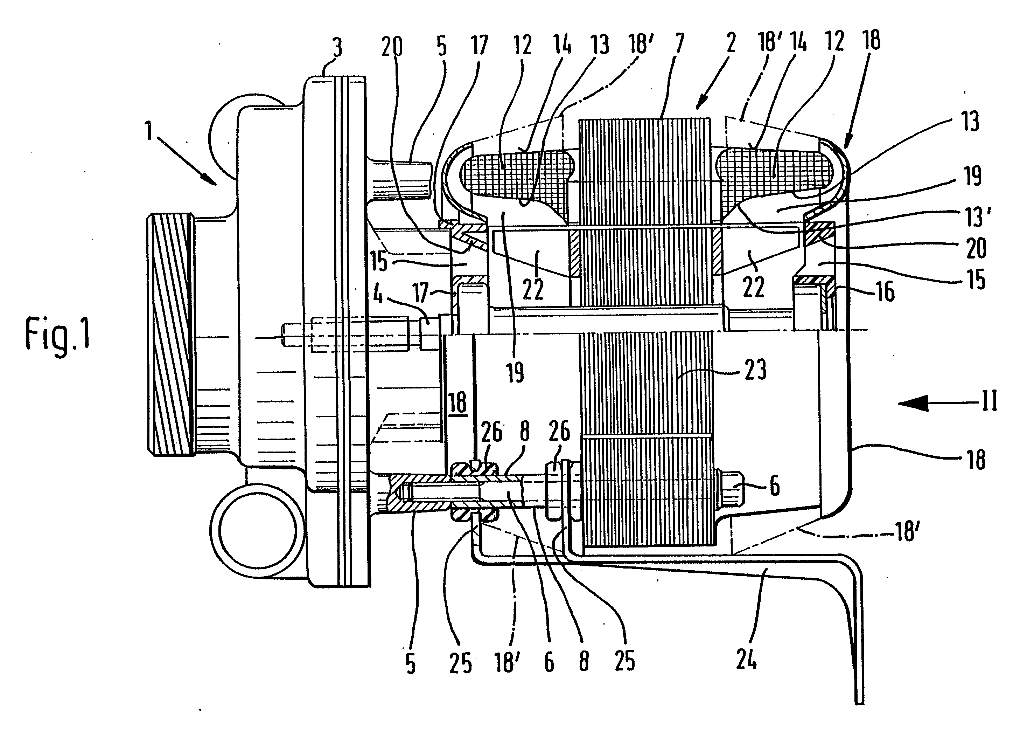

Wie Fig. 1 zeigt, nimmt der Abstand der Innenmantelfläche 13 der beiden spiegelbildlich gleich ausgebildeten Wickelköpfe 12 der Statorwicklung von der Welle 4 gegen das freie Ende der Wickelköpfe 12 hin zu, wobei die an das Statorblechpaket 7 angrenzende Ringzone 13′ eine Hohlkehle bildet.

Der gegen das freie Ende des Wickelkopfes 12 hin zunehmende Abstand der Innenmantelfläche 13 von der Welle 4 ergibt eine Verlängerung der Wickelköpfe 12 in axialer Richtung. Die durch die Ringzone 13′ gebildete Hohlkehle begünstigt die Umlenkung der in radialer Richtung auf die Innenmantelfläche 13 auftreffenden Kühlluft in eine axiale Richtung.

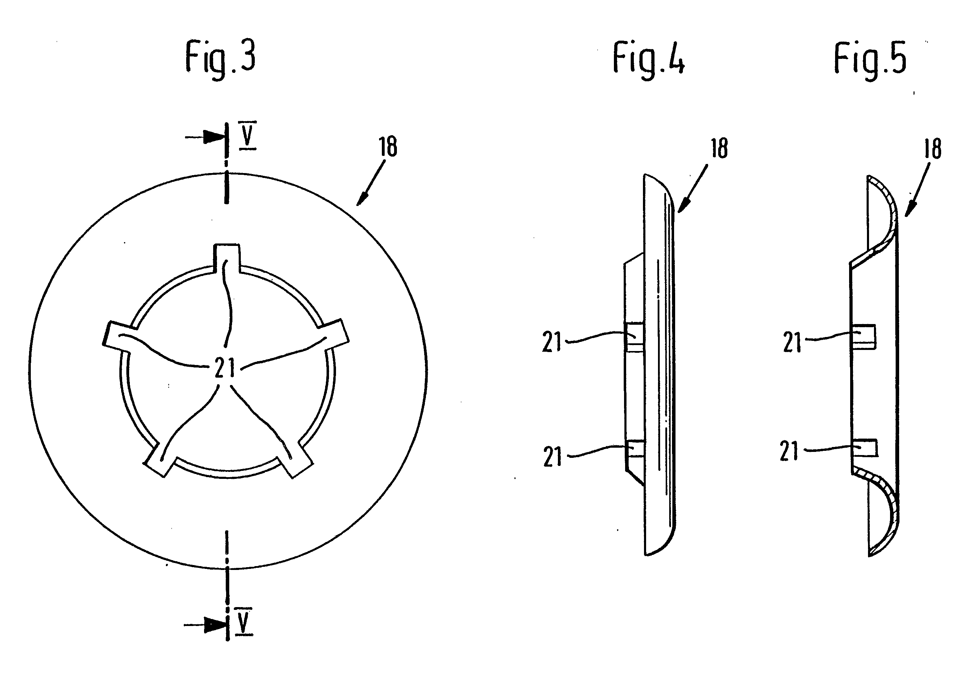

Damit die umgelenkte und entlang der Innenmantelfläche 13 der Wickelköpfe 12 gegen das Wickelkopfende hin strömende Luft nicht zu den benachbarten Luftansaugkanälen 15 gelangen kann, welche in den beiden Lagerschilden 16 und 17 vorgesehen sind, ist beiden Wickelköpfen 12 je eine gleich ausgebildete Luftleitvorrichtung 18 zugeordnet. Diese Luftleitvorrichtungen 18 bestehen, wie die Fig. 3 bis 5 zeigen, je aus einer Ringscheibe. Letztere ist im Ausführungsbeispiel aus einem dünnen Blech hergestellt, könnte aber auch aus Kunststoff hergestellt sein. Die Ringscheibe bildet, wie insbesonder Fig. 5 zeigt, eine Ringzone in Form einer Rinne. Wie Fig. 1 zeigt, ist der Radius dieser Rinne ungefähr so gewählt, daß er um den Betrag größer ist als der Krümmungsradius der Außenmantelfäche des Wickelkopfes 12 im Bereich des Übergangs von der Innenmantelfläche 13 zur Außenmantelfläche 14, um den die Rinne vom Wickelkopf entfernt ist. Die von der Luftleitvorrichtung 18 gebildete Rinne bildet deshalb zusammen mit dem Wickelkopf 12 einen Kanal, der im Bereich des Übergangs von der Innenmantelfläche 13 zur Außenmantelfläche 14 annähernd einen gleichbleibenden Querschnitt hat. Da sich innen an die rinnenförmige Zone der Ringscheibe eine sich zu deren innerem Rand hin konisch verjüngende Ringzone anschließt, hat, wie Fig. 1 zeigt, der einerseits durch diese Ringzone und andererseits durch die Innenmantelfläche 13 des Wickelkopfes 12 begrenzte Abschnitt des Luftleitkanals 19 einen freien Querschnitt, der von einem maximalen Wert an seiner Einlaßöffnung gegen das äußere Ende der inneren Mantelfläche 13 hin abnimmt.

Wie in Fig. 1 durch strichpunktierte Linien 18′ dargestellt, könnte die Luftleitvorrichtung 18 sich radial außerhalb der Außenmantelfläche 14 des Wickelkopfes 12 gegen das Statorblechpaket 7 hin erstrecken und dort sogar eine Auslaßöffnung bilden, durch die hindurch ein Zugriff zu den Wickelköpfen 12 hin ausgeschlossen wäre, so daß diese berührungssicher abgedeckt wären.

Die Luftansaugkanäle 15 sind, wie die Fig. 1 und 2 zeigen, außen durch je einen zur Welle 4 konzentrischen Ringbereich 20 des Lagerschildes 16 bzw. 17 begrenzt, wobei diese Ringbereiche über radiale Stege mit dem das Lager aufnehmenden zentralen Bereich des Lagerschildes verbunden sind. An diese Ringbereiche 20, mit deren innen liegender Stirnfläche die zugeordnete Luftleitvorrichtung 18 bündig abschließt, sind fünf gleichmäßig über den Umfang verteilt angeordnete, radial nach außen überstehende Rippen angeformt. Diese Rippen werden klemmend von fünf Schlitzen 21 aufgenommen, mit welchen die innere Randzone der Luftleitvorrichtung 18 versehen ist, wie Fig. 3 zeigt. Da der innere Rand jeder Luftleitvorrichtung 18 an der Außenmantelfläche des ihn tragenden Ringbereiches 20 anliegt, kann die Kühlluft nicht auf kurzem Wege wieder zu den Luftansaugkanälen 15 gelangen.

Neben beiden Stirnseiten des Statorblechpaketes 7 ist je ein Radiallüfterrad vorgesehen, dessen Lüfterflügel 22 an den Kurzschlußring des Rotors 23 angeformt sind. Wie Fig. 1 zeigt, erstrecken sich die Lüfterflügel 22 bis nahe an die innere Stirnseite des Ringebereiches 20. Sie haben deshalb eine relativ große axiale Länge.

Ein als Ganzes mit 24 bezeichneter Fuß, mittels dessen das gesamte Aggregat in der gewünschten Lage im Inneren des Geschirrspülergehäuses angeordnet wird, weist vier abgewinkelte Laschen 25 auf, die mit je einer Bohrung versehen sind, in die je eine Durchführungstülle 26 aus Gummi eingesetzt ist, wie sie für die Durchführung eines Kabels durch die Wand eines Blechgehäuses verwendet werden. Zwei dieser Durchführungstüllen 26 sitzen klemmend auf der einen Distanzbuchse 8, die anderen beiden auf der zweiten Distanzbuchse 8, wobei der Abstand der beiden auf der selben Distanzbuchse sitzenden Durchführungstüllen 26 voneinander so gewählt ist, daß die eine Durchführungstülle 26 am Statorblechpaket 7 und die andere am Vorsprung 5 anliegt. Das gesamte Aggregat ist deshalb in konstruktiv sehr einfacher Weise in allen Richtungen spielfrei, aber elastisch bewegbar, mit dem Fuß 24 verbunden.

Alle in der vorstehenden Beschreibung erwähnten sowie auch die nur allein aus der Zeichnung entnehmbaren Merkmale sind als weitere Ausgestaltungen Bestandteile der Erfindung, auch wenn sie nicht besonders hervorgehoben und insbesondere nicht in den Ansprüchen erwähnt sind.

**Ansprüche**

1. Pumpenaggregat, insbesondere für Geschirrspüler, bestehend aus einer Pumpe und einem gleichachsig an diese angebauten Asynchronmotor, der wenigstens an der einen Stirnseite seines Rotors ein Radiallüfterrad bildende Lüfterflügel aufweist, dadurch gekennzeichnet, daß jedem vorhandenen Radiallüfterrad eine relativ zum Stator und der Statorwicklung feststehende Luftleitvorrichtung (18) zugeordnet ist, die zusammen mit dem das Lüfterrad in radialem Abstand umgebenden Wickelkopf (12) der Statorwicklung zumindest im Übergangsbereich der Wickelkopfoberfläche von der Innenmantelfläche (13) zur Außenmantelfläche (14) einen Luftleitkanal (19) bildet, der die nach dem Austritt aus dem Lüfterrad gegen die Innenmantelfläche (13) des Wickelkopfes (12) gerichtete Kühlluft um das freiliegende Wickelkopfende herumlenkt.

2. Pumpenaggregat nach Anspruch 1, dadurch gekennzeichnet, daß die Luftleitvorrichtung (18) die Außenmantelfläche (14) des Wickelkopfes (12) zumindest auf einem Teil der in axialer Richtung gemessenen Erstreckung im Abstand umgibt.

3. Pumpenaggregat nach Anspruch 1 oder 2, dadurch gekennzeichnet, daß die Luftleitvorrichtung (18) eine Ringscheibe aus Metall oder Kunststoff ist, die zumindest in einem die Luftleitfläche für die Luft bildenden Teilbereich die Querschnittsform einer Rinne hat.

4. Pumpenaggregat nach Anspruch 3, gekennzeichnet durch mit Materialpartien des zugeordneten Lagerschildes (16, 17) zusammenwirkende Klemmelemente (21) der Luftleitvorrichtung (18).

5. Pumpenaggregat nach einem der Ansprüche 1 bis 4, dadurch gekennzeichnet, daß die Innenmantelfläche (13) desjenigen der beiden Wickelköpfe (12), der zusammen mit der Luftleitvorrichtung (18) den Luftleitkanal (19) begrenzt, von der Austrittsstelle der Wicklung aus dem Stator gegen das freie Ende des Wickelkopfes (12) hin einen größer werdenden Abstand von der Motorwelle (4) aufweist.

6. Pumpenaggregat nach Anspruch 5, dadurch gekennzeichnet, daß die Innenmantelfläche (13) des Wickelkopfes (12) in dem an den Stator anschließenden Endabschnitt eine Hohlkehle bildet.

7. Pumpenaggregat nach Anspruch 5 oder 6, dadurch gekennzeichnet, daß die Lüfterflügel (22) des Lüfterrades zumindest annähernd um das Maß in axialer Richtung verlängert sind, um das die axiale Erstreckung des Wickelkopfes (12) infolge des zum Wickelkopfende hin größer werdenden Abstandes der Innenmantelfläche (13) des Wickelkopfes (12) von der Motorwelle (4) vergrößert ist.

8. Pumpenaggregat nach einem der Ansprüche 1 bis 7, dadurch gekennzeichnet, daß zumindest die Wickelköpfe (12) der Statorwicklung in Gießharz eingebettet sind.

9. Pumpenaggregat nach einem der Ansprüche 1 bis 8, gekennzeichnet durch den Stator durchdringende Verbindungsschrauben (6), die in je einen an das Pumpengehäuse (3) angeformten Vorsprung (5) eingreifen und je eine Distanzbuchse (8) tragen, deren eines Ende am Stator und deren anders Ende an der Stirnfläche des Vorsprunges (5) anliegt.

10. Pumpenaggragat nach Anspruch 9, gekennzeichnet durch Durchführungstüllen (26) aus Gummi, die auf wenigstens einer der Distanzbuchsen (8) angeordnet und in je eine Ausnehmung eines Tragteils (24) eingesetzt sind.

Fig.1

Gm 5933

# Fig.2

## Fig.3

## Fig.4

## Fig.5

18

V

21

18

21

21

18

21

21

EP 0 364 706 A2

Gm 5933